# FASCICULE DE BREVET EUROPEEN

(11) **EP 3 974 677 B1**
(45) Date de publication et mention de la délivrance du brevet: **26.07.2023**
(21) Numéro de dépôt: 21197706.1
(22) Date de dépôt: 20.09.2021
(51) Int. Cl.: F16H 1/28, F16H 57/08, F02C 7/36

(54) **RÉDUCTEUR AMÉLIORÉ POUR LE MAINTIEN DE COURONNE**
VERBESSERTES GETRIEBE FÜR DIE HALTUNG DES HOHLRADES
IMPROVED REDUCED FOR HOLDING THE RING GEAR

(30) Priorité: 23.09.2020 FR 2009657
(43) Date de publication de la demande: 30.03.2022
(73) Titulaire: Safran Transmission Systems, 92700 Colombes (FR)
(72) Inventeur: NIEPCERON, Clément, Paul, René, Moissy Cramayel (FR); SEYFRID, Marc, Dominique, Moissy Cramayel (FR)
(74) Mandataire: Cabinet Beau de Loménie

(56) Documents cités:
- EP-B1- 0 791 148
- FR-A1- 3 092 889
- US-A1- 2011 299 974

## Description

### Domaine Technique

Le présent exposé concerne un réducteur, notamment pour une turbomachine double flux.

### Technique antérieure

Les nouvelles générations de turbomachines à double flux, notamment celles ayant un haut taux de dilution, comportent un réducteur mécanique pour entraîner l'arbre d'une soufflante (aussi appelé fan selon la désignation usuelle en langue anglaise). De manière usuelle, le réducteur a pour but de transformer la vitesse de rotation dite rapide de l'arbre d'une turbine de puissance en une vitesse de rotation plus lente pour l'arbre entraînant la soufflante. Le document FR3092889 présente ainsi un exemple de structure connue pour un réducteur de turbomachine.

Un tel réducteur comprend un pignon central, appelé solaire, une couronne et des pignons appelés satellites, qui sont en prise entre le solaire et la couronne. Les satellites sont maintenus par un châssis appelé porte-satellites. Le solaire, la couronne et le porte-satellites sont des planétaires car leurs axes de révolution coïncident avec l'axe longitudinal X de la turbomachine. Les satellites ont chacun un axe de révolution différent, lesdits axes de révolution étant équi-répartis sur le même diamètre de fonctionnement autour de l'axe des planétaires. Ces axes sont parallèles à l'axe longitudinal X.

Il existe plusieurs architectures de réducteur. Dans l'état de l'art des turbomachines à double flux, les réducteurs sont de type planétaire ou épicycloïdal. Il existe dans d'autres applications similaires, des architectures dites différentielles ou compound.

Sur un réducteur planétaire, le porte-satellites est fixe et la couronne constitue l'arbre de sortie du dispositif qui tourne dans le sens inverse du solaire.

Sur un réducteur épicycloïdal, la couronne est fixe et le porte-satellites constitue l'arbre de sortie du dispositif qui tourne dans le même sens que le solaire.

Sur un réducteur différentiel, aucun élément n'est fixé en rotation. La couronne tourne dans le sens contraire du solaire et du porte-satellites.

Les réducteurs peuvent être composés de un ou plusieurs étages d'engrènement. Cet engrènement est assuré de différentes façons comme par contact, par friction ou encore par champs magnétique.

Il existe plusieurs types d'engrènement par contact comme avec des dentures droites ou en chevron.

Une problématique récurrente concerne le déplacement axial des couronnes, notamment sous l'effet de la déformation centrifuge du porte couronne lors du fonctionnement.

La présente invention vise ainsi à répondre au moins partiellement à cette problématique.

### Exposé de l'invention

A cet effet, le présent exposé concerne un réducteur pour une turbomachine s'étendant autour d'un axe de rotation tel que défini dans la revendication 1, comprenant une couronne reliée à un porte couronne, le porte couronne s'étendant entre un arbre interne qui s'étend autour de l'axe et la couronne, dans lequel
- le porte couronne présente selon une vue en coupe selon un plan incluant l'axe, un segment interne, un segment externe et un support de couronne, s'étendant successivement depuis l'arbre interne jusqu'au support de couronne,
- le segment interne s'étend jusqu'à un rayon R1 par rapport à l'axe,
- le segment externe forme un angle β avec le segment interne,
- le support de couronne forme un angle α avec le segment externe, et est solidarisé à la couronne via une liaison boulonnée réalisée à un rayon nominal R2 par rapport à l'axe,
caractérisé en ce que le rapport R1/R2 est compris entre 0,3 et 0,7, l'angle α est compris entre 60° et 85°, et l'angle β est compris entre 150° et 175°

Selon un exemple, le porte couronne comprend un segment incurvé ou arrondi formant une liaison entre le support de couronne et le segment externe.

Selon un exemple, le segment interne est rectiligne.

Selon un exemple, le segment externe est rectiligne.

Selon un exemple, le rapport R1/R2 est compris entre 0,4 et 0,6.

Selon un exemple, l'angle α est compris entre 65° et 80°.

Selon un exemple, l'angle β est compris entre 155° et 170°.

Le présent exposé concerne également une turbomachine comprenant un réducteur tel que présenté précédemment.

Le présent exposé concerne en outre un aéronef comprenant une telle turbomachine.

### Brève description des dessins

L'invention et ses avantages seront mieux compris à la lecture de la description détaillée faite ci-après de différents modes de réalisation de l'invention donnés à titre d'exemples non limitatifs.
[Fig. 1] La figure 1 présente une structure générale de turbomachine.
[Fig. 2] La figure 2 est une représentation d'un réducteur de turbomachine.
[Fig. 3] La figure 3 est une vue en coupe d'un réducteur selon un aspect de l'invention.
[Fig. 4] La figure 4 est une représentation schématique du porte couronne du réducteur.

Sur l'ensemble des figures, les éléments en commun sont repérés par des références numériques identiques.

### Description des modes de réalisation

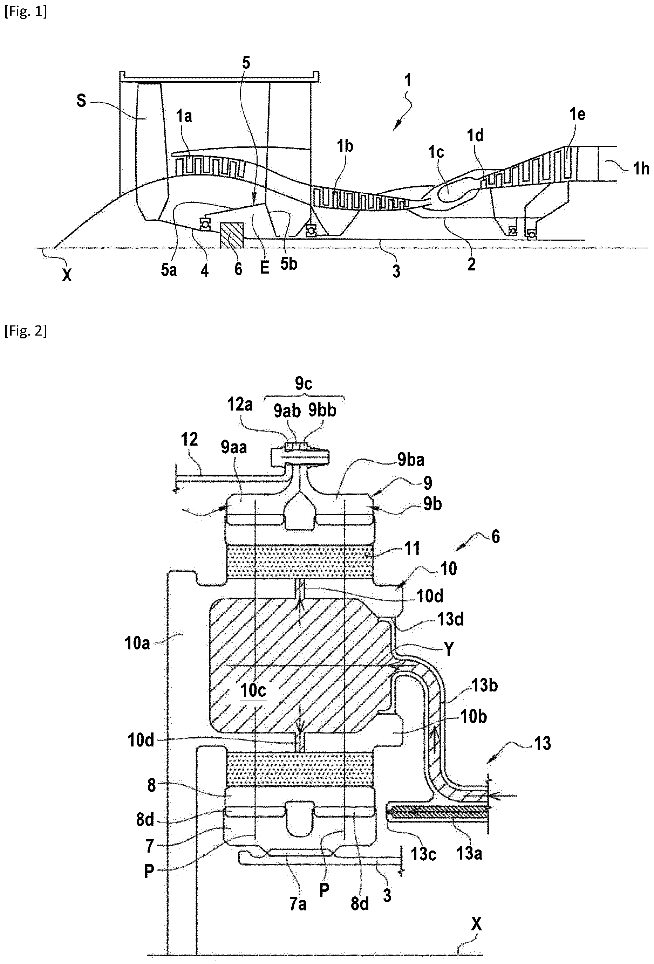

La figure 1 décrit une turbomachine 1 qui comporte, de manière classique, une soufflante S, un compresseur basse pression 1a, un compresseur haute pression 1b, une chambre annulaire de combustion 1c, une turbine haute pression 1d, une turbine basse pression le et une tuyère d'échappement 1h. Le compresseur haute pression 1b et la turbine haute pression 1d sont reliés par un arbre haute pression 2 et forment avec lui un corps haute pression (HP). Le compresseur basse pression 1a et la turbine basse pression 1e sont reliés par un arbre basse pression 3 et forment avec lui un corps basse pression (BP).

La soufflante S est entraînée par un arbre de soufflante 4 qui est entraîné par l'arbre basse pression 3 au moyen d'un réducteur 6. Ce réducteur est généralement de type planétaire ou épicycloïdal.

Bien que la description qui suit concerne un réducteur du type planétaire ou épicycloïdal, elle s'applique également à un différentiel mécanique dans lequel les trois composants, que sont le porte-satellites 10, la couronne 9 et le solaire 7, sont mobiles en rotation, la vitesse de rotation de l'un de ces composants dépendant notamment de la différence de vitesses des deux autres composants.

Le réducteur 6 est positionné dans la partie amont de la turbomachine. Une structure fixe comportant schématiquement, ici, une partie amont 5a et une partie aval 5b qui compose le carter moteur ou stator 5 est agencée de manière à former une enceinte E entourant le réducteur 6. Cette enceinte E est ici fermée en amont par des éléments d'étanchéité tels que des joints d'étanchéité au niveau d'un palier permettant la traversée de l'arbre de soufflante 4, et en aval par des éléments d'étanchéité tels que des joints d'étanchéité au niveau de la traversée de l'arbre basse pression 3.

La figure 2, décrit un réducteur 6, que l'on qualifie également de réducteur mécanique, qui peut prendre la forme de différentes architectures selon si certaines pièces sont fixées ou mobiles en rotation. En entrée, le réducteur 6 est relié à l'arbre basse pression 3, par exemple par l'intermédiaire de cannelures 7a. Ainsi l'arbre basse pression 3 entraîne un pignon planétaire appelé le solaire 7. Classiquement, le solaire 7, dont l'axe de rotation est confondu avec celui de la turbomachine X, entraîne une série de pignons appelés satellites 8, qui sont équirépartis sur le même diamètre autour de l'axe de rotation X. Ce diamètre est égal au double de l'entraxe de fonctionnement entre solaire 7 et satellites 8. Le nombre de satellites 8 est généralement défini entre trois et sept pour ce type d'application.

Les satellites 8 sont maintenus par un châssis appelé porte-satellites 10. Chaque satellite 8 tourne autour de son propre axe Y, et engrène avec la couronne 9.

On distingue ici deux configurations.

Dans une configuration épicycloïdale, l'ensemble des satellites 8 entraine en rotation le porte-satellite 10 autour de l'axe X de la turbomachine. La couronne est fixée au carter moteur ou stator 5 via un porte-couronne 12 et le porte-satellites 10 est fixé à l'arbre de soufflante 4.

Dans une configuration planétaire, l'ensemble des satellites 8 est maintenu par un porte-satellites 10 qui est fixé au carter moteur ou stator 5. Chaque satellite entraine la couronne qui est rapportée à l'arbre de soufflante 4 via un porte-couronne 12.

Chaque satellite 8 est monté libre en rotation à l'aide d'un palier 11, par exemple de type roulement ou palier hydrodynamique. Chaque palier 11 est monté sur un des axes 10b du porte-satellites 10 et tous les axes sont positionnés les uns par rapport aux autres à l'aide d'un ou plusieurs châssis structurels 10a du porte-satellites 10. Il existe un nombre d'axes et de paliers égal au nombre de satellites. Pour des raisons de fonctionnement, de montage, de fabrication, de contrôle, de réparation ou de rechange les axes et le châssis peuvent être séparés en plusieurs pièces.

Pour les mêmes raisons citées précédemment, la denture d'un réducteur peut être séparée en plusieurs hélices. Dans l'exemple illustré nous détaillons le fonctionnement d'un réducteur à plusieurs hélices avec une couronne séparée en 2 demi-couronnes:

Une demi-couronne avant 9a constituée d'une jante 9aa et d'une demi-bride de fixation 9ab. Sur la jante 9aa se trouve l'hélice avant de la denture du réducteur. Cette hélice avant engrène avec celle du satellite 8 qui engrène avec celle du solaire 7.

Une demi-couronne arrière 9b constituée d'une jante 9ba et d'une demi-bride de fixation 9bb. Sur la jante 9ba se trouve l'hélice arrière de la denture du réducteur. Cette hélice arrière engrène avec celle du satellite 8 qui engrène avec celle du solaire 7.

La demi-bride de fixation 9ab de la couronne avant 9a et la demi-bride de fixation 9bb de la couronne arrière 9b forment une bride de fixation 9c de la couronne. La couronne 9 est fixée au porte-couronne 12 en assemblant la bride de fixation 9c de la couronne et la bride de fixation 12a du porte-couronne 12 à l'aide d'un montage boulonné par exemple.

Les flèches de la figure 2 décrivent l'acheminement de l'huile dans le réducteur 6. L'huile arrive dans le réducteur 6 depuis la partie stator 5 dans le distributeur 13 par différents moyens qui ne seront pas précisés dans cette vue car ils sont spécifiques à un ou plusieurs types d'architecture. Le distributeur est séparé en 2 parties en général chacune répétée du même nombre de satellite. Les injecteurs 13a ont pour fonction de lubrifier les dentures et les bras 13b ont pour fonction de lubrifier les paliers. L'huile est amenée vers l'injecteur 13a pour ressortir par l'extrémité 13c afin de lubrifier les dentures. L'huile est également amenée vers le bras 13b et circule via la bouche d'alimentation 13d du palier. L'huile circule ensuite à travers l'axe dans une ou des zones tampons 10c pour ensuite ressortir par les orifices 10d afin de lubrifier les paliers des satellites.

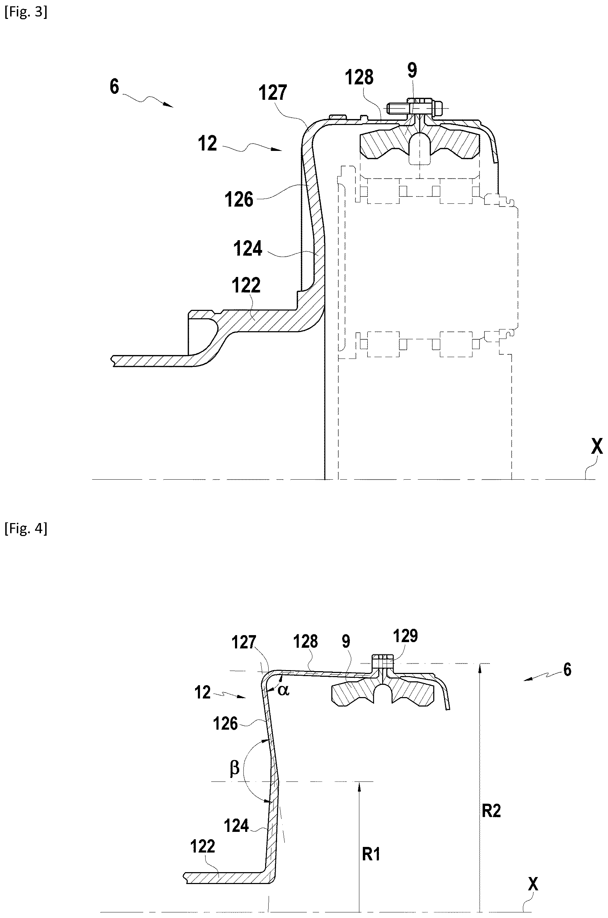

On décrit à présent un exemple de structure de réducteur selon un aspect de l'invention en référence aux figures 3 et 4. La figure 3 est une vue en coupe d'un exemple de réducteur selon un aspect de l'invention. La figure 4 est une représentation schématique d'un porte couronne du réducteur, mettant en avant sa géométrie. Sur ces figures, seuls le porte couronne et la couronne du réducteur sont représentés.

On représente sur ces figures un réducteur 6 comprenant un porte couronne 12 venant maintenir une couronne 9. Le porte couronne 12 et la couronne 9 sont mobiles en rotation autour d'un axe de rotation X-X.

Le porte couronne 12 forme un bras depuis un arbre interne du réducteur 1 jusqu'à une section externe formant un support pour la couronne 9.

En considérant une vue en coupe selon un plan incluant l'axe de rotation X-X, le porte couronne 12 comprend un segment interne 124, un segment externe 126 et un support de couronne 128, ces éléments s'étendant successivement depuis l'axe de rotation X-X jusqu'au support de couronne.

Le segment interne 124 s'étend radialement ou avec un angle d'inclinaison par rapport à la direction radiale par rapport à l'axe de rotation X-X, typiquement depuis un moyeu 122 du porte couronne 12, le moyeu 122 étant typiquement disposé autour d'un arbre fixe ou mobile définissant l'axe de rotation X-X. Le segment interne 124 s'étend jusqu'à un premier rayon R1 par rapport à l'axe de rotation X-X. Le segment interne 124 est typiquement linéaire.

Le segment externe 126 s'étend à la suite du segment interne 124, à partir du premier rayon R1. Le segment externe 126 n'est pas aligné avec le segment interne 124. L'inclinaison du segment externe 126 par rapport au segment interne 124 forme un angle β, compris entre 150° et 175°, ou par exemple entre 155° et 170°, ou encore entre 160° et 170° ou encore entre 160° et 165°.

Le segment externe 126 est typiquement linéaire.

Le support de couronne 128 s'étend à la suite du segment externe 126, et comprend une extrémité à laquelle la couronne 9 est solidarisée, typiquement boulonnée. On désigne ainsi par 129 un logement traversant formé dans le support de couronne 128 et dans la couronne 9 pour la réalisation de la liaison boulonnée entre ces deux éléments.

Le support de couronne 128 forme un angle α par rapport au segment externe 126. L'angle α est compris entre 60° et 85°, ou entre 65° et 80°, ou entre 70° et 75°. Le support de couronne 128 peut être parallèle ou non par rapport à l'axe de rotation X-X. Le support de couronne 128 peut par exemple être rectiligne.

Le support de couronne 128 définit une zone de support sur laquelle est positionnée la couronne 9. Cette zone de support est positionnée à un second rayon R2 par rapport à l'axe de rotation X-X. Le rayon R2 est ainsi le rayon d'implantation de la liaison boulonnée entre le support de couronne 128 et la couronne 9, c'est-à-dire le rayon nominal du perçage 129 dans le cas de l'exemple illustré sur la figure 4.

Le porte couronne 12 est tel que le rapport entre les rayons R1 et R2 est compris entre 0,3 et 0,7, ou par exemple entre 0,35 et 0,65, ou encore entre 0,4 et 0,6, ou entre 0,45 et 0,55.

La jonction entre le segment externe 126 et le support de couronne 128 est typiquement formé par un segment incurvé 127 ou arrondi, ce qui permet notamment d'éviter la formation d'angles vifs, et améliore ainsi la tenue mécanique de l'ensemble.

La géométrie proposée, avec la combinaison des paramètres R1, R2, α et β permet d'améliorer la tenue mécanique du porte couronne 12, et notamment de limiter voire supprimer le déplacement axial de la couronne sous l'effet de l'effort centrifuge lors du fonctionnement. En effet, les réducteurs conventionnels présentent une problématique liée à la déformation du porte couronne et donc au déplacement axial de la couronne en raison de l'effet centrifuge, ce qui entraine des contraintes importantes sur les dentures du réducteur. Le réducteur 6 tel que proposé permet de répondre à cette problématique.

Le réducteur 6 est par exemple un réducteur du type planétaire, à couronne tournante, simple étage ou double étage, avec paliers à éléments roulants ou paliers hydrodynamiques.

Le réducteur 6 tel que proposé peut notamment être employé dans une turbomachine tel qu'un turboréacteur, par exemple une turbomachine telle que présentée en référence à la figure 1, pouvant notamment être employé dans un aéronef.

Bien que la présente invention ait été décrite en se référant à des exemples de réalisation spécifiques, il est évident que des modifications et des changements peuvent être effectués sur ces exemples sans sortir de la portée de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

Il est également évident que toutes les caractéristiques décrites en référence à un procédé sont transposables, seules ou en combinaison, à un dispositif, et inversement, toutes les caractéristiques décrites en référence à un dispositif sont transposables, seules ou en combinaison, à un procédé.

## Revendications

1. Réducteur pour une turbomachine (6) s'étendant autour d'un axe (X-X) de rotation, comprenant une couronne (9) reliée à un porte couronne (12), le porte couronne (12) s'étendant entre un arbre interne (122) qui s'étend autour de l'axe (X-X) et la couronne (9),
dans lequel
- le porte couronne (12) présente selon une vue en coupe selon un plan incluant l'axe (X-X), un segment interne (124), un segment externe (126) et un support de couronne (128), s'étendant successivement depuis l'arbre interne (122) jusqu'au support de couronne (128),
- le segment interne (124) s'étend jusqu'à un rayon R1 par rapport à l'axe (X-X),
- le segment externe (126) forme un angle β avec le segment interne (124),
- le support de couronne (128) forme un angle α avec le segment externe (126), et est solidarisé à la couronne (9) via une liaison boulonnée réalisée à un rayon nominal R2 par rapport à l'axe (X-X),
**caractérisé en ce que** le rapport R1/R2 est compris entre 0,3 et 0,7, et **en ce que** l'angle α est compris entre 60° et 85°, et l'angle β est compris entre 150° et 175°.

2. Réducteur (6) selon la revendication 1, dans lequel le porte couronne (12) comprend un segment arrondi (127) formant une liaison entre le support de couronne (128) et le segment externe (126).

3. Réducteur (6) selon l'une des revendications 1 ou 2, dans lequel le segment interne (124) est rectiligne.

4. Réducteur (6) selon l'une des revendications 1 à 3, dans lequel le segment externe (126) est rectiligne.

5. Réducteur (6) selon l'une des revendications 1 à 4, dans lequel le rapport R1/R2 est compris entre 0,4 et 0,6.

6. Réducteur (6) selon l'une des revendications 1 à 5, dans lequel l'angle α est compris entre 65° et 80°.

7. Réducteur (6) selon l'une des revendications 1 à 6, dans lequel l'angle β est compris entre 155° et 170°.

8. Turbomachine comprenant un réducteur (6) selon l'une des revendications précédentes.

9. Aéronef comprenant une turbomachine selon la revendication précédente.

## Patentansprüche

1. Reduktionsgetriebe für eine Turbomaschine (6), die sich um eine Drehachse (X-X) herum erstreckt, umfassend ein Hohlrad (9), das mit einem Hohlradträger (12) verbunden ist, wobei der Hohlradträger (12) sich zwischen einer Innenwelle (122), die sich um die Achse (X-X) herum erstreckt, und dem Hohlrad (9) erstreckt,
wobei
- der Hohlradträger (12) gemäß einer Schnittansicht nach einer Ebene, welche die Achse (X-X) einschließt, ein inneres Segment (124), ein äußeres Segment (126) und eine Hohlradhalterung (128) aufweist, die sich nacheinander von der Innenwelle (122) bis zu der Hohlradhalterung (128) erstrecken,
- das innere Segment (124) sich bis zu einem Radius R1 in Bezug auf die Achse (X-X) erstreckt,
- das äußere Segment (126) einen Winkel β mit dem inneren Segment (124) bildet,
- die Hohlradhalterung (128) einen Winkel α mit dem äußeren Segment (126) bildet und mit dem Hohlrad (9) über eine verschraubte Verbindung fest verbunden ist, die an einem Nennradius R2 in Bezug auf die Achse (X-X) verwirklicht ist,
**dadurch gekennzeichnet, dass** das Verhältnis R1/R2 zwischen 0,3 und 0,7 beträgt, und dass der Winkel α zwischen 60° und 85° beträgt und der Winkel β zwischen 150° und 175° beträgt.

2. Reduktionsgetriebe (6) nach Anspruch 1, wobei der Hohlradträger (12) ein abgerundetes Segment (127) umfasst, das eine Verbindung zwischen der Hohlradhalterung (128) und dem äußeren Segment (126) bildet.

3. Reduktionsgetriebe (6) nach einem der Ansprüche 1 oder 2, wobei das innere Segment (124) gerade ist.

4. Reduktionsgetriebe (6) nach einem der Ansprüche 1 bis 3, wobei das äußere Segment (126) gerade ist.

5. Reduktionsgetriebe (6) nach einem der Ansprüche 1 bis 4, wobei das Verhältnis R1/R2 zwischen 0,4 und 0,6 beträgt.

6. Reduktionsgetriebe (6) nach einem der Ansprüche 1 bis 5, wobei der Winkel α zwischen 65° und 80° beträgt.

7. Reduktionsgetriebe (6) nach einem der Ansprüche 1 bis 6, wobei der Winkel β zwischen 155° und 170° beträgt.

8. Turbomaschine, umfassend ein Reduktionsgetriebe (6) nach einem der vorhergehenden Ansprüche.

9. Luftfahrzeug, umfassend eine Turbomaschine nach dem vorhergehenden Anspruch.

## Claims

1. A reduction gear for a turbomachine (6) extending around an axis (X-X) of rotation, comprising a ring gear (9) connected to a ring gear carrier (12), the ring gear carrier (12) extending between an internal shaft (122) which extends around the axis (X-X) of the ring gear (9),
wherein
- the ring gear carrier (12) has, according to a section view along a plane including the axis (X-X), an internal segment (124), an external segment (126) and a ring gear support (128), extending successively from the internal shaft (122) until the ring gear support (128),
- the internal segment (124) extends until a radius R1 with respect to the axis (X-X),
- the external segment (126) forms an angle β with the internal segment (124),
- the ring gear support (128) forms an angle α with the external segment (126) and is secured to the ring gear (9) via a bolted connection accomplished at a nominal radius R2 with respect to the axis (X-X),
**characterized in that** the ratio R1/R2 is comprised between 0.3 and 0.7, and **in that** the angle α is comprised between 60° and 85°, and the angle β is comprised between 150° and 175°.

2. The reduction gear (6) according to claim 1, wherein the ring gear carrier (12) comprises a rounded segment (127) forming a connection between the ring gear support (128) and the external segment (126).

3. The reduction gear (6) according to one of claims 1 or 2, wherein the internal segment (124) is rectilinear.

4. The reduction gear (6) according to one of claims 1 to 3, wherein the external segment (126) is rectilinear.

5. The reduction gear (6) according to one of claims 1 to 4, wherein the ratio R1/R2 is comprised between 0.4 and 0.6.

6. The reduction gear (6) according to one of claims 1 to 5, wherein the angle α is comprised between 65° and 80°.

7. The reduction gear (6) according to one of claims 1 to 6, wherein the angle β is comprised between 155° and 170°.

8. A turbomachine comprising a reduction gear (6) according to one of the preceding claims.

9. An aircraft comprising a turbomachine according to the preceding claim.
